# EUROPÄISCHE PATENTSCHRIFT

(11) **EP 2 045 891 B1**
(45) Veröffentlichungstag und Bekanntmachung des Hinweises auf die Patenterteilung: **24.07.2019**
(21) Anmeldenummer: 08016939.4
(22) Anmeldetag: 26.09.2008
(51) Int. Cl.: H02G 3/38

(54) **Wandkanalinstallation mit einem im Mauerstein eingesetzten Kabelkanal für Gebäudeinnenräume**
Wall channel installation with a cable channel for building interiors inserted in masonry
Installation d'un canal de paroi doté d'un chemin de câbles installé dans la pierre taillée pour pièces intérieures d'immeuble

(30) Priorität: 01.10.2007 DE 202007013698 U
(43) Veröffentlichungstag der Anmeldung: 08.04.2009
(73) Patentinhaber: Tehalit GmbH, 67716 Heltersberg (DE)
(72) Erfinder: Schnurr, Richard, 66957 Vinningen (DE)
(74) Vertreter: Nuss, Laurent

(56) Entgegenhaltungen:
- EP-A1- 0 382 597
- EP-A1- 1 043 822
- EP-A1- 1 229 623
- DE-U1-202004 004 505

## Beschreibung

Die vorliegende Erfindung betrifft eine Wandkanalinstallation für Gebäudeinnenräume gemäß dem Oberbegriff nach Anspruch 1.

Lange Zeit wurden Kabelkanäle (Leitungsführungskanäle) bei der Elektroinstallation direkt an der Wand eines Gebäudeinnenraumes angebracht. Kabelkanäle dienen zur Aufnahme von Kabel und Leitungen für die Strom-, Daten- oder Telekommunikationsversorgung und bestehen üblicherweise aus einem U-förmig ausgestalteten Unterteil mit Boden und zwei Seitenwänden sowie einem auf das Unterteil aufsetzbaren Deckel oder Abdeckung. Solche Kabelkanäle sind beispielsweise in der DE 20 2004 004 505 U1, EP 0 382 597 A1 oder EP 1 229 623 A1 beschrieben. Eine Aufputzmontage eines Kabelkanals hat jedoch den Nachteil, dass im Bereich der Kanalführung keine Möbel oder sonstige Gegenstände bündig an die Wand aufgestellt werden können. Ferner sind direkt an der Wand angebrachte Kabelkanäle aus optischen Gründen nicht immer vorteilhaft.

Es wurden daher Bestrebungen unternommen, den Kabelkanal in der Wand zu integrieren. Ein solcher Kabelkanal ist in der Patentschrift US 2,039,982 beschrieben. Der Kanal besteht aus einem Hohlprofil, das an seiner Decke im Wesentlichen so breit ist, wie die Dicke des Wandputzes, der sich an den Kabelkanal anschließen soll. Ferner ist der Kabelkanal an seiner Vorderseite mit einer durchgehenden Längsöffnung versehen, die mit einem Deckel verschließbar ist.

Ein weiter entwickeltes System eines wandintegrierten Kabelkanals ist in der Patentschrift DE 196 22 835 C1 beschrieben. Dieser Kabelkanal ist zur Verlegung von Kabeln im Übergangsbereich zwischen Fußboden und Wand eines Gebäudeinnenraums mit Kanalwänden und einem von diesen teilweise eingeschlossenen Kabelaufnahmeraum bestimmt. Das Hohlprofil ist an seiner Decke derart bemessen, dass dort seine Breite im Wesentlichen der Dicke des Wandputzes entspricht, der sich nach dem Verlegen des Kabelkanals darüber anschließen soll. Der Kabelkanal weist bei funktionsmäßiger Position auf seiner dem Gebäudeinnenraum zugewandten Seite eine durchgehende Längsöffnung auf. Unter der Längsöffnung weist er einen durchgehenden Vorsprung mit einer horizontalen Auflagefläche auf, die sich von der Ebene der horizontalen Auflagefläche des Vorsprungs aus nach unten erstreckt. Die Längsöffnung wird mit einer Fußbodenleiste abgedeckt. Die Fußbodenleiste wird mittels Schrauben an dem nach unten gerichteten Wandabschnitt des Kabelkanals schräg befestigt.

Nachteilig ist bei dieser Konstruktion, dass der Kabelkanal von der Decke lediglich durch den Wandputz umfasst wird. Da der Wandputz nur eine geringe Dicke aufweist, ist der Einlegebereich für die Kabel und Leitungen in den Kabelkanal sehr klein. Ferner ist die Handhabung und Abdeckung des Kabelkanals mit einer Fußbodenleiste sehr unpraktikabel. Ein in das Mauerwerk fest integrierter Kabelkanal, bei dem die zu- und abführenden Leitungen im Mauerwerk selbst verlaufen, wäre wünschenswert.

Die EP 1 043 822 A1 beschreibt einen in einer Wand integrierten Kabelkanal, der im Bereich der Sockelleiste angeordnet ist, gemäß dem Oberbegriff von dem unabhängigen Anspruch 1.

Vor diesem Hintergrund ist es Aufgabe der vorliegenden Erfindung, eine Wandkanalinstallation bereit zu stellen, die bereits in einer frühen Phase des Rohbaus des Gebäudes einbaubar ist und einen direkt in den Mauerstein eingebrachten Kabelkanal umfasst.

Diese Aufgabe wird gelöst durch ein Wandkanalinstallationssystem mit den Merkmalen gemäß Anspruch 1.

Der Grundgedanke der vorliegenden Erfindung besteht darin, den Kabelkanal vollständig in einen Mauerstein aufzunehmen. Der Mauerstein ist hierbei so ausgestaltet, dass er den darin integrierten Kabelkanal oder Kanalabschnitt bündig aufnimmt und abstützt. Der Mauerstein weist dafür an der zum Gebäudeinneren gelegenen Seite eine L-förmige Ausgestaltung auf und stützt unmittelbar den in das Mauerwerk eingesetzten Kabelkanal von der Decke und der Rückseite. Dies hat den Vorteil, dass der Kabelkanal praktisch vollständig in der Wand verschwindet. Bereits in der Rohbauphase kann bei der Wanderstellung im Fußbodenbereich ein L-förmig ausgestalteter Mauersteinsockel entlang des Fußbodens errichtet werden.

Der Kabelkanal kann am Mauersteinsockel mit Befestigungsmitteln befestigt werden, beispielsweise mittels Schrauben-Dübel-Verbindungen. Danach wird das Isolationsmaterial, der Estrich und der Fußbodenbelag wie gehabt aufgebracht. Der Estrich umschließt und stützt den Kabelkanal von dessen Vorderseite über eine Stützfläche. Anschließend kann der Wandputz auf das Mauerwerk aufgebracht werden. Vorzugsweise ist der Kabelkanal so breit, dass der Wandputz mit der Kanaloberseite bündig abschließt.

Die Kabel und Leitungen werden von der Gebäudeinnenseite über die Längsöffnung des Kabelkanals in den Hohlraum des Bodenbereichs des Kanals eingesetzt. Vorzugsweise können die Kabel und Leitungen durch Querstege gehalten werden. Die Querstege sind bevorzugt L-förmlg ausgestaltet und sind mit den Deckelhalteprofilen des Kanalunterteils verrastbar. In einer bevorzugten Ausführungsform enthält die erfindungsgemäße Wandinstallation einen unmittelbar im Mauerwerk integrierten vertikalen Kanal, der mit dieser verbunden ist. Zur Verbindung besitzt der Kabelkanal an dessen Rückwand vorzugsweise Kabeldurchtrittsöffnungen.

Der Deckel wird über U-förmig ausgestaltete Deckelhalteprofile mit dem Kanalunterteil befestigt. Der Deckel schließt bündig mit der Wandoberfläche ab. In einer Ausführungsform kann zusätzlich oder anstelle des Deckels eine Verzierleiste von außen an den Kanal angebracht werden.

Die Erfindung hat den Vorteil, dass der Kabelkanal fest in der Wand integriert ist. Die Nachteile der zuvor genannten Aufputzkanäle werden vermieden. Ferner ist ein nachträgliches Einlegen oder Herausnehmen von Kabel und Leitungen im Kanal durch Abnehmen des Deckels jederzeit möglich. Durch die vertikal verlaufenden Kanäle ist ein vollständig in der Wand integriertes Installationssystem gegeben.

Die Erfindung wird in den nachfolgenden Zeichnungen genauer erläutert. Es zeigen
- Fig. 1: eine Querschnittsansicht der erfindungsgemäßen Wandkanalinstallation mit dem Mauersteinsockel und einem darin eingesetzten Kabelkanal,
- Fig. 2: ein Ausführungsbeispiel eines Gebäudeinnenraumes mit einer erfindungsgemäßen Wandkanalinstallation.

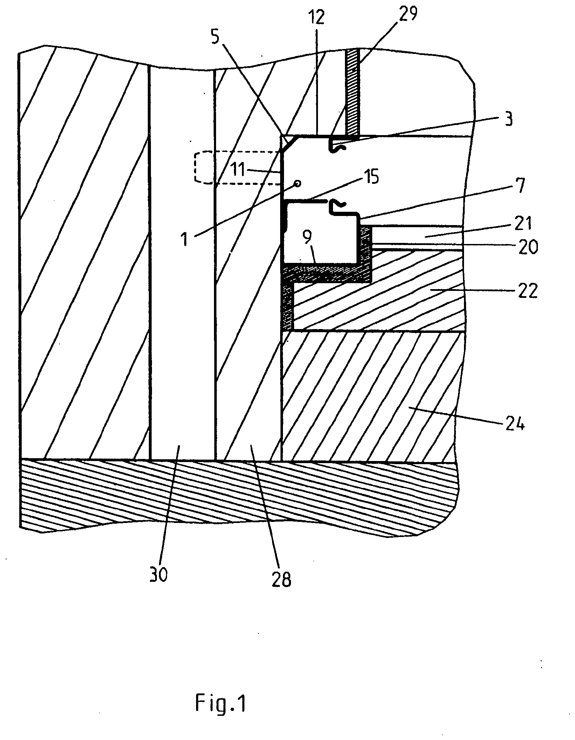

In Fig. 1 erkennt man den Querschnitt durch die erfindungsgemäße Wandkanalinstallation. Der Kabelkanal 1, bestehend aus einem Boden 9, einer Rückwand 11 und einer Decke 12, ist in einem L-förmig geformten Sockel aus Mauerstein 28 eingefasst. Die Rückwand 11 und die Decke 12 werden durch die Schenkel des Mauersteins 28 gestützt. Der Mauerstein 28 besteht vorzugsweise aus Kalksandstein.

In einer Ausführungsform ist der Mauerstein 28 von einem vertikal verlaufenden Kanal 30 durchzogen. Vorzugsweise sind mehrere Kanäle 30 im gleichmäßigen Abstand über die Wand verteilt. Sie dienen dazu, die Leitungen von oben nach unten und umgekehrt in der Wand zu verlegen. Eine Anbindung des Kabelkanals 1 mit dem Kanal 30 erfolgt vorzugsweise über rückseitige Kabeldurchtrittsöffnungen, so dass die im Kabelkanal 1 verlaufenden Kabel und Leitungen in den vertikal verlaufenden Kanal 30 geführt werden können.

In der Rohbauphase wird zunächst ein Sockel des Mauersteins 28 zur Errichtung des Mauerwerks errichtet. Der L-förmig ausgestaltete Mauerstein 28 besitzt einen vertikal verlaufenden länglichen Schenkel sowie einen etwa rechtwinklig dazu abgewinkelten horizontalen kurzen Schenkel an der Oberseite. Der Kanal 1 wird in dem Eckbereich dieser beiden Schenkel eingefasst. Vorzugsweise wird der Kanal über Befestigungsmittel, wie eine Schrauben-Dübel-Verbindung, an dem Mauerstein 28 befestigt.

Ferner erkennt man in Fig. 1 die einzelnen Bodenlagen, insbesondere den Fußbodenbelag 21, den Estrich 22 und das Isolationsmaterial 24. Für den Schutz des Kabelkanals 1 kann vorzugsweise ein Füllmaterial 20 eingebracht werden.

Auf diese Weise ist der Kabelkanal 1 von der Vorderseite fest eingefasst. Die aus Mauerstein 28 hergestellte Wand erhält auf der Außenseite einen Wand putz 29, der vorzugsweise mit der Stützfläche 7 des Kabelkanals 1 bündig abschließt.

Zur Aufnahme eines Deckels besitzt das Unterteil des Kabelkanals 1 U-förmig ausgestaltete Deckelhalteprofile 3.

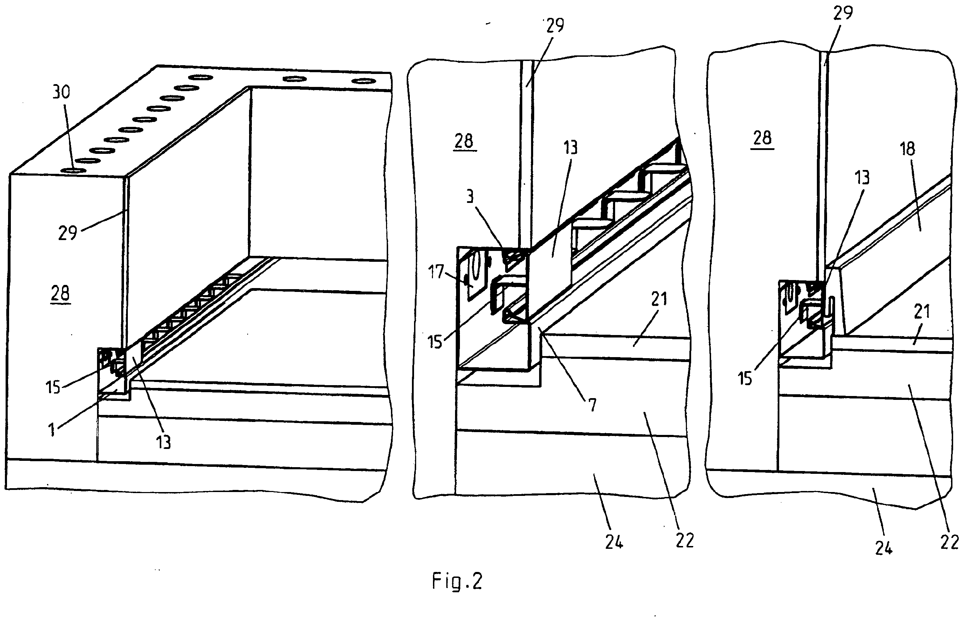

In Fig. 2 sind verschiedene Ansichten einer Ausführungsform der erfindungsgemäßen Wandkanalinstallation zu sehen. Die aus Mauerstein 28 bestehende Wand ist von mehreren, vorzugsweise regelmäßig angeordneten vertikalen Kanälen 30 durchzogen (linkes Bild). Durch diese Kanäle 30 verlaufen die zu führenden Kabel und Leitungen von oben nach unten oder umgekehrt. Der Kabelkanal 1 ist in dem L-förmigen Ausschnitt des Mauersteins 28 im Übergangsbereich zwischen Boden und Wand eingefasst.

Der Boden besteht aus Fußbodenbelag 21, Estrich 22 und Isolationsmaterial 24 (mittleres Bild). Über die Stützfläche 7 ist der Kabelkanal 1 auf diese Weise fest in der Wand in dem Mauerstein 28 vom Fußboden eingefasst. Zum Verschließen des Kabelkanals 1 ist ein Deckel 13 vorgesehen, der in die Deckelhalteprofile 3 eingerastet wird. Zu sehen ist ein Deckelabschnitt.

Zum Einfassen der Kabel und Leitungen in den Kabelkanal 1 sind ferner L-förmig ausgestaltete Querstege 15 im Hohlraum des Kabelkanals 1 eingebracht. Diese haben eine parallele Orientierung mit dem L-förmigen Mauerstein 28. Zur weiteren Verzierung kann eine Verzierungsleiste 18 (rechtes Bild) über die Längsöffnung von außen an die Wand und an den Fußboden befestigt werden. In einer bevorzugten Ausführungsform wird anstelle des Deckels 13 direkt die Verzierungsleiste 18 mit dem Kabelkanal 1 befestigt.

## Patentansprüche

1. Wandkanalinstallation für Gebäudeinnenräume, umfassend einen L-förmig ausgestalteten Mauerstein (28) mit einem darin eingefassten Kabelkanal (1), bestehend aus Boden (9), Rückwand (11) und Decke (12), dessen Längsöffnung vom Gebäudeinneren zugänglich und mit einem Deckel (13) abdeckbar ist, wobei der Kabelkanal von seiner Rückwand (11) und Decke (12) durch den Mauerstein (28) gestützt wird und auf der dem Gebäudeinneren zugewandten Seite eine Stützfläche (7) aufweist, die von Estrich (22) und/oder Fußbodenbelag (21) eingeschlossen ist, **dadurch gekennzeichnet, dass** der Kabelkanal (1) Deckelhalteprofile (3) aufweist, die oberhalb der Stützfläche (7) nach innen in den Kabelkanalinnenraum versetzt angeordnet sind, wodurch der auf das Kabelkanalunterteil aufgesetzte Deckel (13) nahezu bündig mit der Wand abschließt, wobei die Decke (12) und die Rückwand (11) des Kabelkanals (1) über ein im schiefen Winkel abgewinkeltes Eckstück (5) verbunden sind.

2. Wandkanalinstallation nach Anspruch 1, **dadurch gekennzeichnet, dass** in dem Mauerstein (28) wenigstens ein vertikal angeordneter Kanal (30) verläuft.

3. Wandkanalinstallation nach Anspruch 2, **dadurch gekennzeichnet, dass** der wenigstens eine vertikal verlaufende Kanal (30) an den Kabelkanal (1) im Mauerstein (28) angebunden ist.

4. Wandkanalinstallation nach Anspruch 1, **dadurch gekennzeichnet, dass** die Stützfläche (7) bündig mit dem Wandputz (29) abschließt.

5. Wandkanalinstallation nach einem der vorhergehenden Ansprüche, **dadurch gekennzeichnet, dass** zwischen Fußbodenbelag (21) und/oder Estrich (22) und/oder Isoliermaterial (24) eine Füllmasse (20) ausgebildet ist.

6. Wandkanalinstallation nach einem der vorhergehenden Ansprüche, **dadurch gekennzeichnet, dass** der Mauerstein (28) mehrere regelmäßig angeordnete vertikale Kanäle (30) umfasst.

7. Wandkanalinstallation nach einem der vorhergehenden Ansprüche, **dadurch gekennzeichnet, dass** der Kabelkanal (1) Befestigungsöffnungen (17) zur Befestigung des Kabelkanals (1) an den Mauerstein (28) mit Befestigungsmitteln besitzt.

8. Wandkanalinstallation nach einem der vorhergehenden Ansprüche, **dadurch gekennzeichnet, dass** in dem Kabelkanal (1) Querstege (15) eingesetzt sind.

## Claims

1. Wall duct installation for building interiors, comprising an L-shaped masonry block (28) having, incorporated therein, a cable duct (1), consisting of base (9), rear wall (11) and ceiling (12), whose longitudinal opening is accessible from the building interior and can be covered by a cover (13), wherein the cable duct is supported by its rear wall (11) and ceiling (12) through the masonry block (28) and has, on the side facing the building interior, a supporting surface (7) which is enclosed by screed (22) and/or floor covering (21), **characterized in that** the cable duct (1) has cover-retaining profiles (3) which are arranged so as to be offset above the supporting surface (7) inwardly into the cable duct interior, with the result that the cover (13) placed on the cable duct lower part terminates virtually flush with the wall, wherein the ceiling (12) and the rear wall (11) of the cable duct (1) are connected via a corner piece (5) which is angled off at an inclined angle.

2. Wall duct installation according to Claim 1, **characterized in that** at least one vertically arranged duct (30) extends in the masonry block (28).

3. Wall duct installation according to Claim 2, **characterized in that** the at least one vertically extending duct (30) is attached to the cable duct (1) in the masonry block (28).

4. Wall duct installation according to Claim 1, **characterized in that** the supporting surface (7) terminates flush with the wall plaster (29).

5. Wall duct installation according to one of the preceding claims, **characterized in that** a filling compound (20) is formed between floor covering (21) and/or screed (22) and/or insulating material (24).

6. Wall duct installation according to one of the preceding claims, **characterized in that** the masonry block (28) comprises a plurality of regularly arranged vertical ducts (30).

7. Wall duct installation according to one of the preceding claims, **characterized in that** the cable duct (1) has fastening openings (17) for fastening the cable duct (1) to the masonry block (28) using fastening means.

8. Wall duct installation according to one of the preceding claims, **characterized in that** transverse webs (15) are inserted in the cable duct (1).

## Revendications

1. Installation de conduit mural pour pièces intérieures de bâtiment, comprenant un bloc de maçonnerie (28) en forme de L dans lequel est encastré un conduit de câbles (1) qui est constitué d'une base (9), d'une paroi arrière (11) et d'un plafond (12), et dont l'ouverture longitudinale est accessible depuis l'intérieur du bâtiment et peut être recouverte par un couvercle (13), le conduit de câbles étant soutenu par le bloc de maçonnerie (28) par sa paroi arrière (11) et son plafond (12) et présentant, du côté tourné vers l'intérieur du bâtiment, une surface d'appui (7) qui est enfermée par une chape (22) et/ou un revêtement de sol (21), **caractérisée en ce que** le conduit de câbles (1) présente des profilés de retenue de couvercle (3) qui sont disposés au-dessus de la surface d'appui (7) et décalés vers l'intérieur dans l'espace intérieur du conduit de câbles, de sorte que le couvercle (13) placé sur la partie inférieure de conduit de câbles se termine pratiquement en affleurement avec le mur, le couvercle (12) et la paroi arrière (11) du conduit de câbles (1) étant reliés par une pièce de coin (5) coudée à angle oblique.

2. Installation de conduit mural selon la revendication 1, **caractérisée en ce qu'**au moins un conduit (30) disposé verticalement s'étend dans le bloc de maçonnerie (28).

3. Installation de conduit mural selon la revendication 2, **caractérisée en ce que** ledit au moins un conduit (30) s'étendant verticalement est relié au conduit de câbles (1) dans le bloc de maçonnerie (28).

4. Installation de conduit mural selon la revendication 1, **caractérisée en ce que** la surface d'appui (7) se termine en affleurement avec l'enduit mural (29).

5. Installation de conduit mural selon l'une des revendications précédentes, **caractérisée en ce qu'**une matière de remplissage (20) est formée entre un revêtement de sol (21) et/ou une chape (22) et/ou un matériau isolant (24).

6. Installation de conduit mural selon l'une des revendications précédentes, **caractérisée en ce que** le bloc de maçonnerie (28) comprend plusieurs conduits verticaux (30) disposés régulièrement.

7. Installation de conduit mural selon l'une des revendications précédentes, **caractérisée en ce que** le conduit de câbles (1) possède des ouvertures de fixation (17) pour fixer le conduit de câbles (1) au bloc de maçonnerie (28) avec des moyens de fixation.

8. Installation de conduit mural selon l'une des revendications précédentes, **caractérisée en ce que** des branches transversales (15) sont insérées dans le conduit de câbles (1).
